# EUROPEAN PATENT APPLICATION

(11) **EP 3 163 012 A1**
(43) Date of publication of application: **03.05.2017**
(21) Application number: 15192283.8
(22) Date of filing: 30.10.2015
(51) Int. Cl.: E21B 47/12, H04L 29/06

(54) **SUBSEA COMMUNICATION DEVICE**

(71) Applicant: Siemens Aktiengesellschaft, 80333 München (DE)
(72) Inventor: Brekke, Endre, 7049 Trondheim (NO); Furu, Gaute Skjelbred, 0482 Oslo (NO); Kristiansen, Karstein, 7051 Trondheim (NO); Schofield, John Bradford, 7042 Trondheim (NO); Volent, Kjetil Zsolt, 7022 Trondheim (NO)

(57) **Abstract**

A subsea communication device (30) is configured for data communication with a topside device (10; 21-24) over a first communication link (2). The subsea communication device (30) has a plurality of second interface units for data communication with plural subsea units (41-44) over second communication links (45-48) which are point-to-point communication links. A processing circuit of the subsea communication device (30) is provided for signal and data conversion.

## Description

### TECHNICAL FIELD

The invention relates to a subsea communication device and to a communication system for enabling different types of data communication between a topside system and a subsea installation.

### BACKGROUND

Subsea installations are widely used for offshore oil and gas production, for offshore electric power plants, or for other purposes. The subsea installation may comprise subsea units deployed on the ocean floor, for example. The subsea installation may comprise a Well Control Module (WCM), a Manifold Control Module (MCM) or other subsea units.

In order to enable communication between topside units installed above sea level and subsea units, communication links need to be established. Such communication links may be used for control purposes and, optionally, for polling information from subsea units by a topside unit.

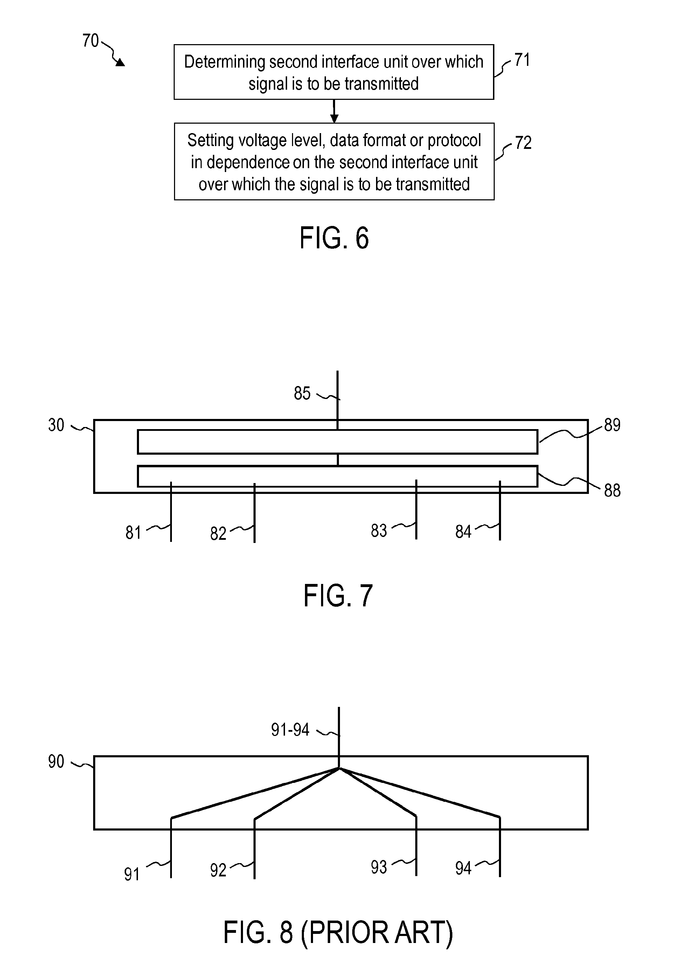

A multidrop topology may be used to communicatively couple a topside control system to plural subsea units. Fig. 8 shows an exemplary multidrop topology in which each one of several communication links 91-94 connects a topside control system with respectively one subside unit. A subsea device 90 may be operative to perform signal distribution in such a way that communication links are established which extend from a topside unit to an associated subsea unit.

There may be some shortcomings associated with multidrop communication topologies or other existing subsea communication infrastructures. For illustration, the maximum performance attainable in such a communication system will typically be governed by the one of the communication links which has the lowest quality. For illustration, a topside unit may need to adjust its data transmission rate such that signals are reliably received even when transmitted over the one of the communication links that has the weakest performance. This may also affect the performance of the other communication links, because the weakest communication link governs the data transmission rates that are attained.

### SUMMARY

In view of the above, there is a need for advanced techniques for communication between one or several topside units with a plurality of subsea units. In particular, there is a need for devices, systems and methods that address the limitations of multidrop topologies. There is a need for devices, systems and methods that allow higher data rates to be attained over high quality communication links even if the high quality communication link and a low quality communication link are established to extend through the same optical fiber or electrical connection for at least a part of the path between topside unit and subsea units.

This need is addressed by the features of the independent claims. The dependent claims define embodiments.

According to an aspect, a subsea communication device is provided. The subsea communication device comprises a first interface unit for data communication with a topside device over a first communication link. The subsea communication device comprises a plurality of second interface units for data communication with plural subsea units over second communication links. Each second communication link respectively is a point-to-point communication link between the subsea communication device and respectively one of the plural subsea units. The subsea communication device comprises a processing circuit coupled to the first interface unit and the plurality of second interface units for signal and data conversion.

A subsea communication device having such a configuration allows different communication techniques to be used between the topside unit and the subsea communication device on the one hand and between the subsea communication device and the various subsea units connected to it on the other hand. The subsea communication device inserted into the communication path acts as an active communication unit that may perform signal and data conversion so that different communication techniques tailored to the different needs and constraints may be combined.

The processing circuit may comprise a modem or a serial interface controller. This allows the subsea communication device to control the data transmission from the subsea communication device to the subsea units in response to a first signal that is received from the topside unit, using a signal level, signal format and/or data protocol between the subsea communication device and the respective subsea unit that is suitable for short-range distances in subsea installations.

The processing circuit may comprise the modem and the serial interface controller, the modem and the serial interface controller being coupled to different second interface units of the plurality of second interface units. Different communication techniques may be used for different subsea units that are respectively connected to the subsea communication device.

The plurality of second interface units may comprise at least one serial interface. The serial interface may be configured for coupling to an RS 232, RS 422 or RS 485 connection or a CAN bus. The serial interface may be configured for communication with a Modbus RTU, Modbus TCP or SiiS Level 2 unit, for example.

The plurality of second interface units may comprise at least one interface for transmitting or receiving modulated signals. The modulated signals may be generated based on Frequency Shift Keying (FSK), Quadrature Phase Shift Keying (QPSK), Amplitude Shift Keying (ASK), Amplitude Phase Shift Keying (APSK), Phase Shift Keying (PSK), Quadrature Amplitude Modulation (QAM) or any other digital modulation technique, or combination of such techniques. The modem configured to modulate or demodulate the modulated signal may be a Bell-202 compliant modem. The

The first interface unit may be configured for packetized data communication. The processing circuit may be configured to process packets of the packetized data communication. The processing circuit may be configured to generate second signals for outputting via one or several of the second interface units in dependence on packetized data received at the first interface. The processing circuit may be configured to generate packetized data in dependence on second signals received from one or several of the second interface units from the subsea units.

The first interface unit may be configured for coupling to an optical fiber for receiving the packetized data communication.

The packetized data communication may comprises Ethernet frames. The Ethernet frames may be generated by a topside communication hub for transmission via transparent Ethernet.

The first interface unit may be configured to receive or transmit signals in accordance with a first data transmission scheme. At least one second interface unit of the plural second interface units may be configured to transmit or receive signals in accordance with a second data transmission scheme different from the first data transmission scheme. This allows a first signal level, data format, and/or data protocol to be used in communication from the topside device to the subsea communication device and a second signal level, data format, and/or data protocol to be used in communication from the subsea communication device to a subsea unit connected thereto.

The processing circuit may be configured to perform a signal and data conversion between the first data transmission scheme and the second data transmission scheme.

The processing circuit may be configured to generate a signal in accordance with the second data transmission scheme in response to receipt of data from the topside device at the first interface unit.

The processing circuit may be configured to generate a data packet in accordance with the first data transmission scheme in response to receipt of a signal from a subsea device at a second interface unit selected from the plurality of second interface units. Generating the data packet in accordance with the first data transmission scheme may involve both data conversion, e.g. to packetize data or implement error correction, and signal conversion that affects physical layer characteristics.

The subsea communication device may be configured such that at least two second communication links are distinguished from each other in one or several of:
- voltage level;
- data format; and/or
- data protocol.

This allows different voltage levels to be used for different subsea units, for example, in dependence on noise, attenuation or other quality indicators measured on the respective second communication link. A first voltage level, data format or data protocol may be used for transmitting signals from the subsea communication device to one of the subsea units, where a different second voltage level, data format or data protocol may be used for transmitting signals from the subsea communication device to a different one of the subsea units.

The subsea communication device may be configured to set at least one of the voltage level, data format, data rate and data protocol for the plural second communication links in dependence on quality parameters measured on the plural second communication links. The quality parameters may include noise and/or attenuation.

The topside device with which the subsea communication device is interfaced may be a topside unit or a topside communication hub that is connected to several topside units.

According to another aspect, a topside communication device is provided. The topside communication device may comprise a first interface unit for data communication with a subsea communication device over a first communication link there topside communication device may comprise an plurality of second interface units for data communication with plural topside units over second communication links, each second communication link respectively been a point-to-point communication link between the topside communication device and respectively one of the topside units. The topside communication device may comprise a processing circuit coupled to the first interface unit and the plurality of second interface units for signal and data conversion.

Such a topside communication device may be configured for communicatively interacting with a subsea communication device according to an embodiment.

At least one of the second interface units of the topside communication device may be configured to receive an Ethernet frame from one of the topside units.

The processing circuit of the topside communication device may be configured such that an Ethernet frame received from one of the topside units over a transparent Ethernet link to the subsea communication device.

At least one of the second interface units of the topside communication device may be a serial interface. The serial interface may be configured for communication in accordance with RS 422 or RS 485. The serial interface may be configured for communication with a Modbus RTU.

A communication system according to an embodiment comprises the subsea communication device according to an embodiment and a topside communication device coupled to the first interface unit of the subsea communication device.

In a communication system having such a configuration a two-level control system may be formed by the subsea communication device and there topside communication device. The subsea communication device may be a subsea communication hub that establishes point-to-point communication links with the subsea units. The topside communication device may be a topside communication hub that establishes point-to-point communication links with the topside units.

According to another aspect, a method of performing data communication between a topside system and a subsea installation is provided. The subsea installation comprises a subsea communication device having a first interface unit and a plurality of second interface units coupled to a plurality of subsea units. The method comprises transmitting first signals over a first communication link between the topside system and the first interface unit of the subsea communication device. The method comprises transmitting second signals over plural second communication links between the plurality of second interface units and plural subsea units. Each second communication link may respectively be a point-to-point communication link between the subsea communication device and respectively one of the plural subsea units. The method may comprise performing, by the subsea communication device, a signal and data conversion between the first signals and the second signals.

Such a method allows different communication techniques to be used between the topside unit and the subsea communication device on the one hand and between the subsea communication device and the various subsea units connected to it on the other hand. The subsea communication device inserted into the communication path acts as an active communication unit that may perform signal and data conversion so that different communication techniques tailored to the different needs and constraints may be combined.

The method may be performed using a subsea communication device or a communication system according to an embodiment.

Features of the method according to embodiments and the effects attained thereby correspond the features that may be used in the subsea communication device and the communication system according to embodiments.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

The foregoing and additional features and effects of the invention will become apparent from the following detailed description when read in conjunction with the accompanying drawings, in which like reference numerals refer to like elements.
FIG. 1 illustrates a communication system according to an embodiment.
FIG. 2 illustrates a subsea installation comprising a subsea communication device according to an embodiment.
FIG. 3 illustrates a subsea installation comprising a subsea communication device according to an embodiment.
FIG. 4 is a topside system comprising a topside communication device according to an embodiment.
FIG. 5 is a flowchart of a method according to an embodiment.
FIG. 6 is a flowchart of a method according to an embodiment.
FIG. 7 illustrates a topology of a communication system according to an embodiment.
FIG. 8 illustrates a multidrop topology of a conventional communication system.

### DETAILED DESCRIPTION

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling.

Hereinafter, techniques will be discussed which facilitate communication between one or several topside units and subsea units. These techniques may use a subsea communication device. The subsea communication device may be operated as a converter that performs signal and data conversion to convert a transmission in accordance with a first data communication technique on a topside-subsea link into a transmission in accordance with a second data communication technique on subsea-subsea links. The subsea communication device may be a subsea communication hub that establishes several point-to-point communication links with plural subsea units.

The conversion performed by the subsea communication device may affect both physical layer characteristics, such as frequency, amplitude or other signal characteristics, and the data encoded in the signals.

As will be described in more detail, different signal levels, data formats, and/or data protocols may be used for transmitting data from the topside device to the subsea communication device and for transmitting data from the subsea communication device for the subsea units. Similarly, different signal levels, data formats, and/or data protocols may be used for transmitting data from the subsea units taught the subsea communication device and for transmitting data from the subsea communication device to the topside device.

The communication techniques that are respectively used on each of the two legs of a communication path, i.e. the first communication link between the topside device and the subsea communication device and the second communication link between the subsea communication device and a subsea unit, may be respectively selected in dependence on the needs that exist for each one of the two paths. For illustration, signal levels, data formats and/or data protocols suitable for transmission over large distances in excess of 1000 m, 2000 m, or even 3000 m may be used on the first communication link. The first communication links may have a length in between 1 km and 50 km if implemented by electrical signals or a length between 1 km and up to 200 km if implemented by optical signals in fiber optics. Other signal levels, data formats and/or data protocols suitable for transmission over shorter distances in subsea installations while providing robustness against noise or other effects encountered in signal transmission in subsea installations may be respectively used on the second communication links.

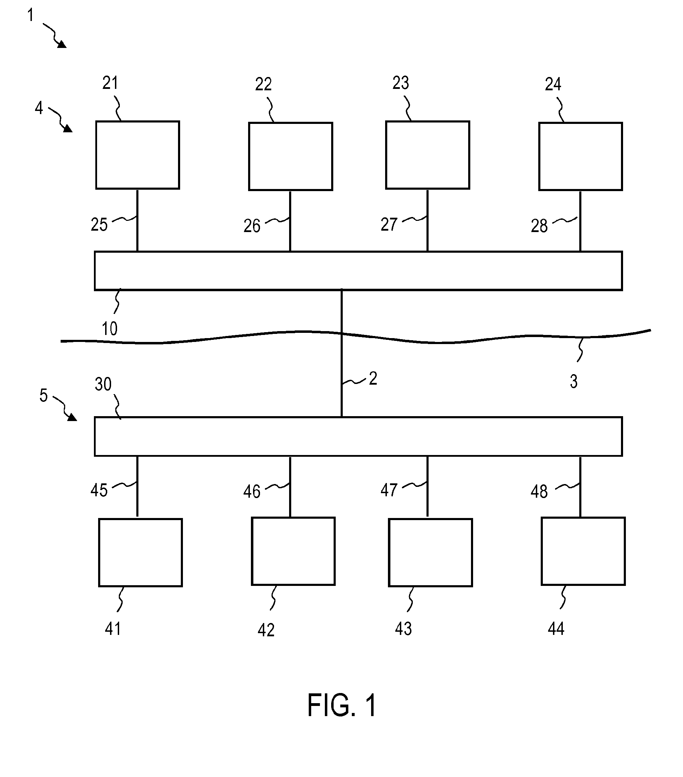

FIG. 1 shows a communication system 1 according to an embodiment. The communication system 1 comprises a topside system 4 and a subsea installation 5. The topside system 4 comprises a plurality of topside units 21-24. The topside units 21-24 may comprise one or several control terminals, computers, servers, display panels or other units for controlling subsea units, displaying information from subsea units, or providing other control or feedback functions.

The topside system 4 comprises a topside communication device 10. The topside communication device 10 may have a plurality of interfaces for coupling to the topside units 21-24. The topside communication device 10 may be configured to provide data packets to the subsea installation 5 via a topside-subsea communication link 2 that may comprise one or several optical fibers, cables or may have another configuration.

The subsea installation 5 comprises a subsea communication device 30 and a plurality of subsea units 41-44. The subsea communication device 30 and the plurality of subsea units 41-44 are installed below sea level 3. The subsea communication device 30 and/or the plurality of subsea units 41-44 may be deployed at a depth of more than 1000 m, more than 2000 m or even more than 3000 m below sea level 3. Even larger distances between the topside communication device 10 and the subsea communication device 30 may be supported.

As will be described in more detail below, the subsea communication device 30 is configured to perform a signal and data conversion to transmit data received via the first communication link from the topside device 10 on to one of the subsea units 41-44. Different signal levels, data formats, and/or data protocols may be used on the first leg of a communication path that interconnects the topside communication device 10 and the subsea communication device 30 and the second leg of the communication path that extends between the subsea communication device 30 and respectively one of the subsea units 41-44.

The subsea communication device 30 may have a plurality of second interface units for connecting to the subsea units 41-44. The plurality of second interface units may include several different types of interfaces. The plurality of second interface units may include at least one serial interface for communication between the subsea communication device 30 and a subset of the subsea units 41-44. For illustration, a connection 45 between the subsea communication device 30 and the subsea unit 41 may be an RS 232 connection. The subsea unit 41 may be a Modbus RTU unit. Alternatively or additionally, a connection 46 between the subsea communication device 30 and the subsea unit 42 may be an RS 422/485 connection. The subsea unit 42 may be a Modbus TCP unit. Alternatively or additionally, a connection 47 between the subsea communication device 30 and the subsea unit 43 may be a CAN bus. The subsea unit 43 may be a SiiS Level 2 unit. The plurality of second interface units may include an interface for modulated signals for communication between the subsea communication device 30 and another subset of the subsea units 41-44. For illustration, a connection 48 between the subsea communication device 30 and the subsea unit 44 may be modem link. Signals may be modulated according to FSK, QPSK, ASK, APSK, PSK, QAM or any other digital modulation technique, or combination of such techniques. The subsea unit 44 may be a Bell-202 compliant unit.

The subsea communication device 30 has a first interface to receive signals over the link 2 from the topside communication device 10. Packetized data may be transmitted over the topside-subsea communication link 2. The packetized data may include Ethernet frames originating from the topside units 21-24 and/or generated by the topside communication device 10 based on data received from the topside units 21-24.

The topside communication device 10 may have several different types of interfaces for establishing a connection to the topside units 21-24. The topside communication device 10 may have one or several interfaces for receiving data over at least one Ethernet link 25-27 from at least one topside unit 21-23. The topside communication device 10 may have one or several interfaces for receiving data over a serial communication link 28, e.g. a RS 422, RS 485 or other serial interface, from a topside unit 24. The topside unit 24 may implement a Modbus RTU data protocol, for example.

The topside communication device 10 may be configured to transmit data packets received from one or several topside units 21-23 as data packets, e.g. via transparent Ethernet, to the subsea communication device 30.

The topside communication device 10 may be configured to packetize data received from at least one topside unit 24 over a serial communication link 28 for transmission over the topside-subsea communication link 2.

Communication from subsea units 41-44 to topside units 21-24 may be implemented in a similar manner, e.g. when a topside unit polls information from one or several of the subsea units 41-44.

In order to transmit data from a subsea unit 41-44 to a topside unit 21-24, the subsea communication device 30 may perform a signal and data conversion. The signal and data conversion may comprise packetizing data received from a subsea unit 41-44 to form data packets for transmission over the topside-subsea communication link 2. The subsea communication device 30 may be configured to form Ethernet frames or other data packets in response to receipt of data over one of the second links 44-48 that connect the subsea communication device 30 with the subsea units 41-44.

Different data protocols may be used on the topside-subsea communication link 2 and on the second communication links 44-48 that connect the subsea communication device 30 with the subsea units 41-44. A transparent Ethernet channel may be established on the topside-subsea communication link 2, e.g. over an optical fiber. Data protocols such as Modbus RUT, Modbus TCP, SiiS Level 2, Bell-202, or other data protocols different from the data protocol used on the topside-subsea communication link 2 may be used on the second communication links 44-48 that connect the subsea communication device 30 with the subsea units 41-44.

Signal levels, modulation schemes, data formats or other data transmission characteristics may be different for the topside-subsea communication link 2 and each one of the second communication links 44-48. The required conversion is performed by the subsea communication device 30.

A communication system 1 having such a topology provides various effects. For illustration, the topside-subsea communication link 2 may utilize data protocols and signal levels that are optimized for a point-to-point link that extends across a relatively large physical distance between a topside unit and the subsea communication device 30. The distance between the subsea communication device 30 and the subsea units 41-44 is typically smaller and may be much smaller than the distance between the subsea communication device 30 and the topside communication device 20. Therefore, data protocols may be used on the subsea second communication links 44-48 which will not need to be optimised for large distances point on the other hand, other challenges like electrical noise degeneration may be encountered on the second communication links 44-48 that extend subsea.

For further illustration, the subsea communication device 30 also provides the opportunity to use different data protocols for different subsea units 41-44 connected to the subsea communication device 30. A data protocol may be used on one of the second communication links 45 that is different from a data protocol that is used on a different one of the second communication links 46-48.

The two legs for communication between a topside device 10 and a subsea unit 41-44, i.e. the first leg which is formed by the topside-subsea communication link 2 and the second leg which is formed by one of the second communication links 41-44, may be different with respect to signal levels, signal format and/or data protocol, in contrast to conventional multidrop topologies which use the same data protocol along the complete path from the topside unit to the subsea unit. As explained above, this configuration attains enhanced versatility in selecting a data protocol, signal level, data rate, and/or data format that is more suitable for communication over longer distances for the topside-subsea communication link and in selecting another data protocol, signal level, and/or data format that is more robust with respect to the electrical noise encountered in the subsea second communication links 44-48 for the second communication links 44-48. Alternatively or additionally, different data protocols, signal levels, data rate, and/or data formats may be used for different subsea units 41-44.

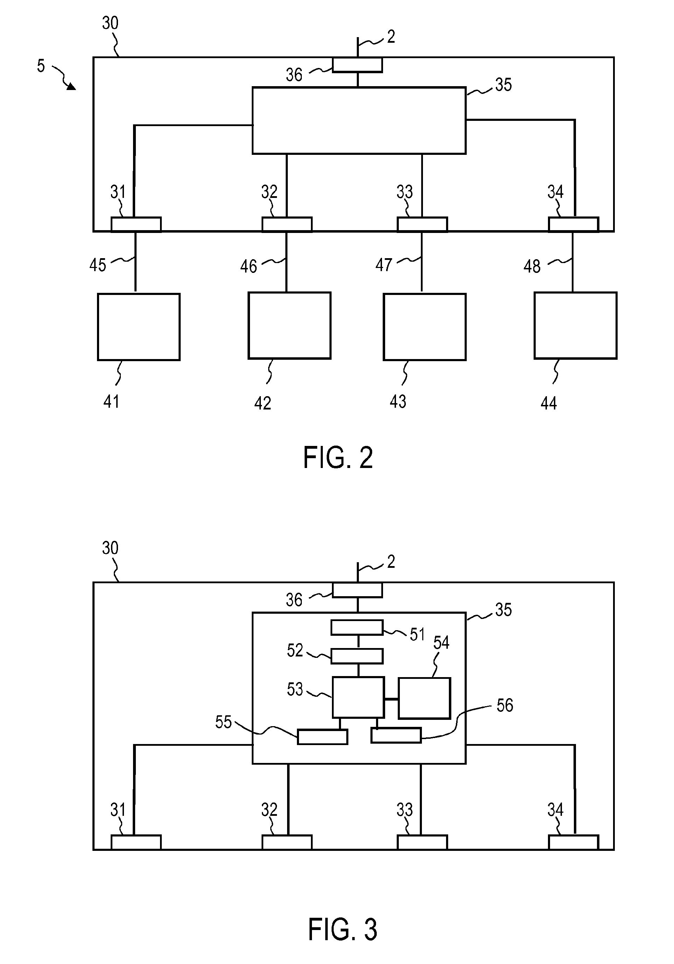

Configurations of the subsea communication device 30 according to exemplary embodiments will be described in more detail with reference to Fig. 2 and Fig. 3.

Fig. 2 shows a subsea installation 5 including a subsea communication device 30 according to an embodiment.

The subsea communication device 30 comprises a first interface unit 36 that is configured for coupling to the topside-subsea communication link 2. The first interface unit 36 may be configured for coupling to an optical fiber. The first interface unit 36 may be configured to receive packetized data, e.g. Ethernet frames.

The subsea communication device 30 comprises a plurality of second interface units 31-34. The plurality of second interface units 31-34 may comprise at least two different types of interface units to support at least two different data protocols. Alternatively or additionally, different data protocols may also be supported by two second interface units 31-34 which have the same physical configuration.

The subsea communication device 30 comprises a processing circuit 35. The processing circuit 35 may comprise a plurality of different integrated circuits, such as process source, controllers, application specific integrated circuits (ASICs), or other logical components. The processing circuit 35 may be configured to process data received at the first interface unit 36 and to control at least one of the second interface units 31-34 in response to reception of a data packet at the first interface unit 36. For illustration, the processing circuit 35 may be configured to offer the data included in one of several data packets and to generate a serial signal for outputting Myer one of the second interface units 31-34.

Alternatively or additionally, the processing circuit 35 may be configured to process data received from the subsea units 41-44 to transmit the data on to one of the topside units 21-24. The processing circuit 35 may be configured to packetize data received from one of the subsea units 41-44 to transmit the data over the first interface unit 36 and the topside-subsea communication link 2.

The processing circuit 35 may be configured to perform different kinds of signal and data conversion depending on the subsea unit 41-44 to which data is to be transmitted or from which data is received for transmission to a topside unit. For illustration, the processing circuit 35 may be configured to perform a conversion between serial data transmissions and packetized data transmissions. Alternatively or additionally, the processing circuit 35 may comprise a modem for a signal and data conversion between modulated signals such as FSK, QPSK, ASK, APSK, PSK, QAM modulated signals and packetized data transmissions.

Fig. 3 is a block diagram representation of a subsea communication device 30 according to an embodiment. Elements that may correspond in structure, function and/or operation to elements that have been described with reference to Fig. 1 or Fig. 2 are designated with the same reference numerals.

The processing circuit 35 may comprise a data packet processing module 51. The packet processing module 51 may be configured to depacketize data received at the first interface unit 36 from the topside-subsea communication link 2. The packet processing module 51 may be configured to packetized data for transmission over the topside-subsea communication link 2 through the first interface unit 36.

The processing circuit 35 may comprise a buffer 52. The buffer 52 may be configured to buffer data depacketized from Ethernet frames or other data packets that were received via the topside-subsea communication link 2. The buffer 52 may be configured to buffer data retrieved from signals received at the second interface units 31-34 for transmission over the topside-subsea communication link 2 through the first interface unit 36.

The processing circuit 35 may comprise a control logic 53 that determines how data received at the first interface unit 36 is to be transmitted to the respective one of the subsea units 41-44. The control logic 53 may be coupled to a storage medium 54 that stores configuration data. The storage medium 54 may be a non-volatile memory. The storage medium 54 may store configuration data that defines which data protocol is to be used for each one of the subsea units 41-44 connected to the subsea communication device 30. The configuration data may be written into the storage medium 54 prior to deployment or upon deployment of the subsea communication device 30. Alternatively or additionally, the storage medium 54 may store configuration data that depends on noise, attenuation or other link characteristics of the second links 44-48. The control logic 53 may be configured to set voltage levels for signal transmission over the second interface units 31-34 in dependence on the configuration data. The control logic 53 may be configured to set data rates for signal transmission over the second interface units 31-34 in dependence on the configuration data. Thereby, different transmission conditions for the different subsea units may be taken into account. It is no longer required to adjust the data transmission from a topside unit to several subsea units such that the data transmission can accommodate the weakest one of the links. Rather, transmission conditions optimised for the respective second communication link 45-48 may be used.

The processing circuit 35 may comprise a serial interface controller 55 and a modem 56. While the modem 56 is shown as part of the processing circuit 35 in Fig. 3, the modem 56 may also be incorporated into one or several of the second interface units 31-34.

Depending on the data protocol that is used for data transmission to one of the subsea units 41-44, the control logic 53 may select whether the serial interface controller 55 is controlled to cause data to be transmitted over a serial interface or whether modem 56 is controlled to cause data to be transmitted as modulated signal to one of the subsea units 41-44. Parameters of the data transmission such as voltage levels, data formats, data rates, or other data protocol parameters may be set differently for different subsea units 41-44, depending on the configuration data and/or noise encountered on the respective second communication link 45-48.

When data is transmitted from a topside unit to a subsea unit, the subsea communication device 30 may be operated as follows. The packet processing module 51 may retrieve payload data from an Ethernet frame or other data packet that is received at the first interface unit 36. The payload data may be buffered by the buffer 52. The control logic 53 may determine which data protocol, signal level, data rate, data format, and/or other transmission parameters are to be used for transmitting the respective data over a second communication link 45-48 that is a point-to-point communication link between the respective subsea unit and the subsea communication device 30. The control logic 53 may use configuration data stored in the storage medium 54 to identify the suitable data protocol, signal level, data rate, data format and/or other transmission parameters. At least part of the configuration data may be based on measurements, such as attenuation or noise conditions encountered on the respective second communication link 45-48. Depending on the data protocol that is to be used, the control logic 53 may control either the serial interface controller 55 or the modem 56 to transmit the data on to one of the subsea units 41-44.

When data is transmitted from a subsea unit to a topside unit, similar techniques may be employed. For illustration, in response to receiving a signal at one of the second interface units 31-34, the processing circuit 35 may be configured to retrieve the payload data encoded in the state of transmission. The payload data may be buffered by a buffer. The packet processing module 51 may packetize the buffered data, e.g. in Ethernet frames or other data packets.

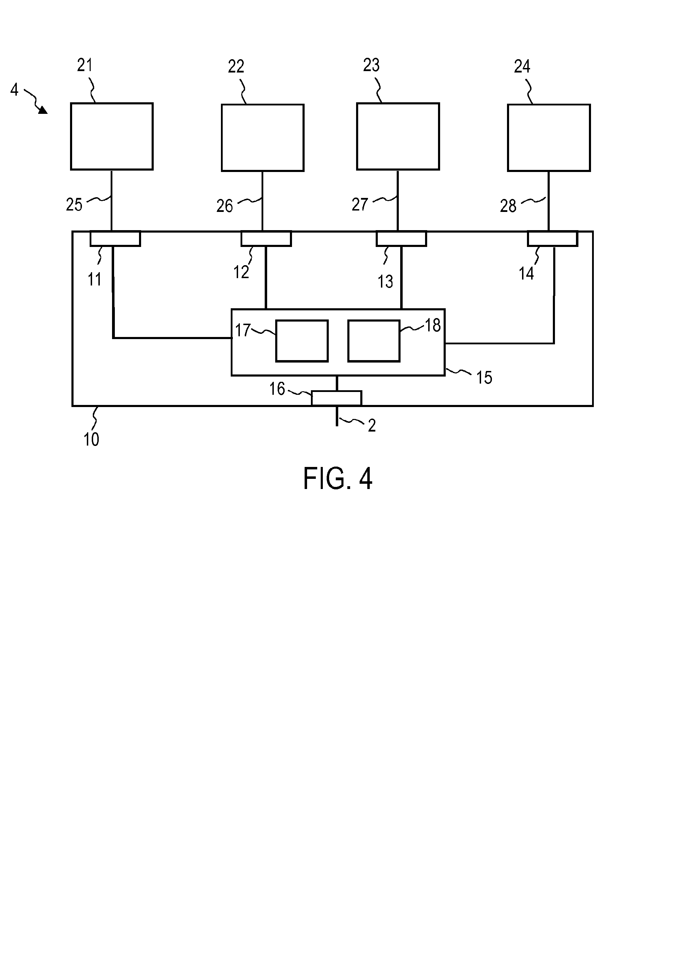

Fig. 4 shows a topside system 4 including a topside communication device 10 according to an embodiment.

The topside communication device 10 comprises a first interface unit 16 that is configured for coupling to the topside-topside communication link 2. The first interface unit 16 may be configured for coupling to an optical fiber. The first interface unit 16 may be configured to transmit packetized data, e.g. Ethernet frames.

The topside communication device 10 comprises a plurality of second interface units 11-14. The plurality of second interface units 11-14 may comprise at least two different types of interface units to support at least two different data protocols. Alternatively or additionally, different data protocols may also be supported by two second interface units 11-14 which have the same physical configuration.

The topside communication device 10 comprises a processing circuit 15. The processing circuit 15 may comprise a plurality of different integrated circuits, such as process source, controllers, application specific integrated circuits (ASICs), or other logical components. The processing circuit 15 may be configured to process data received at the second interface units 11-14 to transmit the data over the first interface unit 16 and the topside-subsea communication link 2. The processing circuit 15 may be configured to process data received at the first interface unit from the subsea communication device 30 to transmit the data over one of the second interface units 11-14 to an associated topside unit 21-24.

The topside communication device 10 may perform different operations depending on the topside-topside communication link 25-28 over which data is transmitted. For illustration, at least one of the topside units 21-23 may communicate with the topside communication device over an Ethernet link. Different data protocols may be used, such as OPC-UA, Modbus TCP, CIA309 (SiiS level 2). The processing circuit 15 of the topside communication device 10 may be configured to process data packets received over such an Ethernet-based connection for transmission over the topside-subsea communication link 2 that may be a transparent Ethernet link. The processing circuit 15 of the topside communication device 10 may be configured to process data received over a serial data link from another topside unit 24 for transmission over the topside-subsea communication link 2.

The topside communication device 10 may comprise a control logic 17 that performs a signal and data conversion that depends on the topside unit 21-24 from which data is received or to which data is to be transmitted. The control logic may but does not need to perform a signal and data conversion that depends on configuration parameters stored in a storage medium 18.

In other implementations, the topside communication device 10 does not need to be configured to perform any signal and/or data conversion. For example, if Ethernet packets are received at the topside communication device 10 the topside communication device may pass on those Ethernet packets over the topside-subsea communication link 2. Encapsulation, error correction, are other techniques may still be implemented by the topside communication device 10.

Further, while the topside communication device 10 may be configured to establish point-to-point connections with at least some of the topside units 21-24, the topside communication device 10 may also be operative to pass through data packets received from one or several of the topside units 21-24 to thereby effectively establish a communication link that extends between one of the topside units 21-24 and the subsea communication device 30.

In still other embodiments, the topside communication device 10 may also be omitted. One or several of the topside units 21-24 may be coupled to the subsea communication device 30 via the topside-subsea communication link 2.

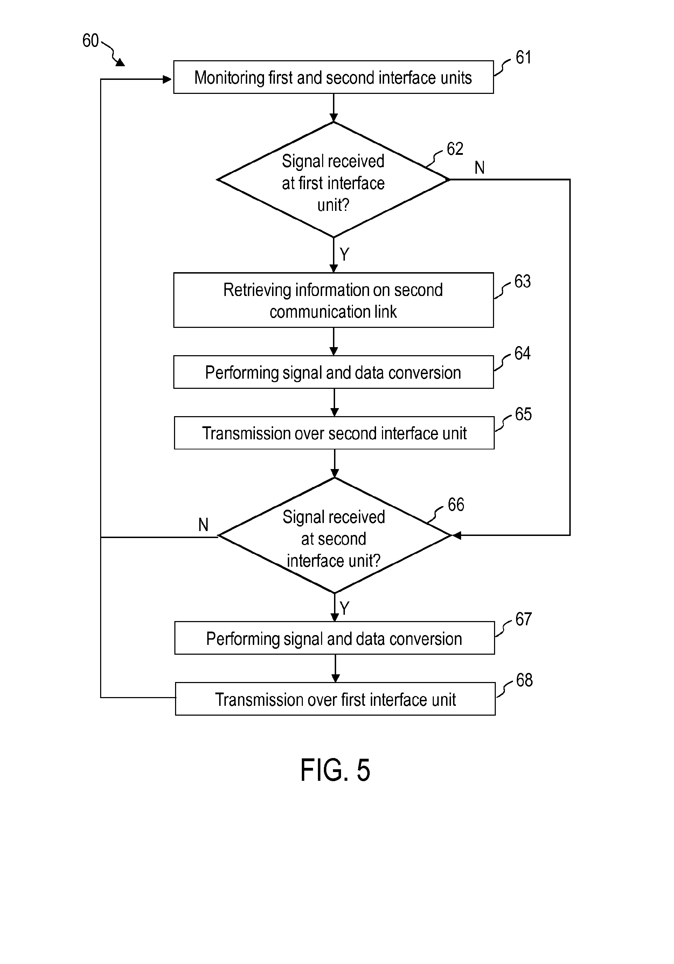

Fig. 5 is a flowchart of a method 16 according to an embodiment. The method 60 may be performed using the subsea communication device 30 or the communication system 1 according to an embodiment.

At 61, the subsea communication device 30 may monitor whether signals are received at one of the first or second interface units.

At 62, the subsea communication device 30 may determine whether a signal was received at the first interface unit. If no signal was received at the first interface unit, the method may proceed to step 66.

At 63, when a data transmission was received at the first interface unit over a topside-subsea communication link 2, the subsea communication device 30 may retrieve information on the second communication link 45-48 over which the data is to be transmitted to one of the subsea units 41-44. The information on the second communication link 45-48 may include information on a data protocol, a signal level, e.g. a voltage level, a data rate, a signal format, and/or other transmission parameters that are to be used on the respective one of the second communication links 45-48.

At 64, the subsea communication device 30 may perform a signal and data conversion. The signal and data conversion may take into account the information on the second communication link 45-48 over which the data is to be transmitted. For illustration, one of serial transmission or modulated signal transmission schemes may be selected in dependence on the information on the second communication link 45-48. For further illustration, a voltage level of the serial signal transmission or of the modulated signals may be set in dependence on the information on the second communication link 45-48 over which the data is to be transmitted.

At 65, a second interface unit 31-34 is controlled to transmit the data to one of the subsea units 41-44 over the second communication link that has a terminating point at the subsea communication device 30.

At 66, the subsea communication device 30 may determine whether a signal was received at a second interface unit 31-33. If no signal was received at the first interface unit, the monitoring at step 61 may be continued.

At 67, when a data transmission was received at a second interface unit 31-34 the subsea communication device 30 may perform a signal and data conversion. The signal and data conversion may take into account information on the second communication link 45-48 over which the data is to be transmitted. The signal and data conversion may include a packetization of data. The data may be encapsulated in Ethernet frames for transmission over a transparent Ethernet connection, for example.

At 68, the first interface unit may be controlled to transmit the packetized data to the topside communication device 20 or a topside unit 21-24.

In the method according to an embodiment, the communication link between the subsea communication device 30 and the subsea unit 41-44 may have characteristics that vary from one subsea unit to another subsea unit. Accordingly, different data protocols, voltage levels, data formats or other signal transmission characteristics may be used on different second communication links 44-48. One, several, or all of the second communication links 44-48 may respectively be used for data transmission in accordance with a data protocol that is different from a data protocol used on the topside-subsea communication link 2.

Fig. 6 is a flowchart of a method according to an embodiment. The method may be performed by the subsea communication device 30.

It 71, it is determined over which second interface unit data is to be transmitted. The second interface unit may be determined as a function of address information or another identifier of a subsea unit that is included in a data packet received it the first interface unit 36.

At 72, voltage level, data format, data rate and/or data protocol used for communication between the subsea communication device 30 and the respective subsea unit 41-44 may be set. The voltage level, data format, data rate and/or data protocol may be different for different subsea units 41-44. The voltage level, data format, data rate, data protocol and/or other transmission characteristics may be adjusted as a function configuration information stored in the subsea communication device 30. The configuration information may include measurement-based data, e.g. noise or attenuation information, that may be used to adjust the voltage level or data rate so as to ensure that the transmission meets pre-defined quality criteria.

Fig. 7 is a diagram illustrating a communication topology that may be attained by a subsea communication device 30 according to an embodiment.

The communication from a topside device, such as the topside communication device 10 or a topside unit 21-24, to a subsea unit includes a topside-subsea communication link 85 that is a first communication link and a second communication link 81-84 that extends subsea between the subsea communication device 30 and one of the subsea units 41-44.

Different data protocols are used on the topside-subsea communication link 85 and the second communication link 81-84 that extends subsea as a point-to-point communication link between the subsea communication device 30 and one of the subsea units 41-44. The required data and signal conversion between the communication links is performed by the subsea communication device 30. As described above, various effects are attained by such a communication system topology. Data protocols that are particularly suitable for the different requirements imposed on the topside-subsea communication link 85 and the second communication links 81-84 that extend within a subsea installation 5.

Different layers 88, 89 may be implemented in the subsea communication device 30. For illustration, a layer 88 may be operative to perform signal distribution. Another layer 89 may be operative to perform an aggregation or conversion of signals between different formats. End points of the communication links 81-84 that extend within the subsea installation 5 are located at the subsea communication device 30.

Fig. 8 is a diagram illustrating a multidrop topology that is not an embodiment of the invention. Data communication links 91-94 may extend from a topside unit to a subsea unit. In either one of the data communication links 91-94, the same data protocol is used on the path from a subsea unit and the topside unit that are the end points of the data communication links 91-94. While signal distribution may be effected by a device 90 installed subsea, the device 90 does not perform a conversion between different data protocols, for example.

While exemplary embodiments have been described in detail with reference to the drawings, and return it if features may be implemented in still other embodiments. For illustration, other numbers and/or types of interface units may be provided in the subsea communication device 30 or the topside communication device 20. For further illustration, while the subsea communication device 30 may include both a serial interface controller and a modem to accommodate communication with subsea units over either one of serial communication links and modulated signal transmission links, the subsea communication device does not need to include both a serial interface and an interface for modulated signal transmission. Further, other types of interfaces may be supported by the subsea communication device 30. Alternatively or additionally, the topside communication device 20 may have a further interface for communication with the topside units 21-24. Other numbers types of topside units 21-24 or subsea units 41-44 may be used.

Thus, summarizing, above techniques have been illustrated that enable to improve communication between topside units and subsea units. A subsea communication device may be operative to perform signal and data conversion operations, which mitigates shortcomings of conventional multidrop topologies.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A subsea communication device (30), comprising:
a first interface unit (36) for data communication with a topside device (10; 21-24) over a first communication link (2; 85);
a plurality of second interface units (31-34) for data communication with plural subsea units (41-44) over second communication links (45-48; 81-84), each second communication link (45-48; 81-84) respectively being a point-to-point communication link between the subsea communication device (30) and respectively one of the plural subsea units (41-44); and
a processing circuit (35) coupled to the first interface unit (36) and the plurality of second interface units (31-34) for signal and data conversion.

2. The subsea communication device of claim 1,
wherein the processing circuit (35) comprises a modem (56) and/or a serial interface controller (55).

3. The subsea communication device of claim 2,
wherein the processing circuit (35) comprises the modem (56) and the serial interface controller (55), the modem (56) and the serial interface controller (55) being coupled to different second interface units (31-34) of the plurality of second interface units (31-34).

4. The subsea communication device of any one of the preceding claims,
wherein the first interface unit (36) is configured for packetized data communication, and
wherein the processing circuit (35) is configured to process packets of the packetized data communication.

5. The subsea communication device of claim 4,
wherein the packetized data communication comprises an Ethernet frame transmission.

6. The subsea communication device of any one of the preceding claims,
wherein the first interface unit (36) is configured to receive or transmit signals in accordance with a first data transmission scheme,
wherein at least one second interface unit of the plural second interface units (31-34) is configured to transmit or receive signals in accordance with a second data transmission scheme different from the first data transmission scheme, and
wherein the processing circuit (35) is configured to perform a signal and data conversion between the first data transmission scheme and the second data transmission scheme.

7. The subsea communication device of claim 6,
wherein the processing circuit (35) is configured to generate a signal in accordance with the second data transmission scheme in response to receipt of data from the topside device (10; 21-24) at the first interface unit (36).

8. The subsea communication device of any one of the preceding claims,
wherein the subsea communication device (30) is configured such that at least two second communication links (45-48; 81-84) are distinguished from each other in one or several of:
- voltage level;
- data format; and/or
- data protocol.

9. The subsea communication device of claim 8,
wherein the subsea communication device (30) is configured to set at least one of the voltage level, data format and data protocol for the plural second communication links (45-48; 81-84) in dependence on noise or attenuation on the plural second communication links (45-48; 81-84).

10. A communication system, comprising:
the subsea communication device (30) of any one of the preceding claims, and
a topside communication device (10) coupled to the first interface unit (36) of the subsea communication device (30).

11. The communication system of claim 10,
wherein the topside communication device (10) is a topside communication hub.

12. The communication system of claim 11,
wherein the topside communication hub is connected to a plurality of topside units (21-24),
the topside communication hub being configured to communicatively interface the plurality of topside units (21-24) with the subsea communication device (30).

13. The communication system of claim 12,
wherein at least one of the topside units (21-24) is coupled to the topside communication hub via an interface for data packet transmission and at least another one of the topside units (21-24) is coupled to the topside communication hub via a serial interface.

14. A method of performing data communication between a topside system (4) and a subsea installation (5), wherein the subsea installation comprises a subsea communication device (30) having a first interface unit (36) and a plurality of second interface units (31-34) coupled to a plurality of subsea units (41-44), wherein the method comprises:
transmitting first signals over a first communication link (2; 85) between the topside system (4) and the first interface unit (36) of the subsea communication device (30);
transmitting second signals over plural second communication links (45-48; 81-84) between the plurality of second interface units (31-34) and plural subsea units (41-44), each second communication link (45-48; 81-84) respectively being a point-to-point communication link between the subsea communication device (30) and respectively one of the plural subsea units (41-44); and
performing, by the subsea communication device (30), a signal and data conversion between the first signals and the second signals.

15. The method of claim 14,
which is performed using the subsea communication device (30) of any one of claims 1 to 9 or the communication system (1) of any one of claims 10 to 13.
